# EUROPEAN PATENT SPECIFICATION

(11) **EP 1 728 957 B1**
(45) Date of publication and mention of the grant of the patent: **11.08.2010**
(21) Application number: 05380115.5
(22) Date of filing: 01.06.2005
(51) Int. Cl.: E05F 11/48, F16H 55/48

(54) **Cable guide, window regulator rail with such a guide and assembly procedure of such a cable guide**
Seilführung, Fensterführungsschiene mit einer solchen Seilführung und Montageverfahren einer solchen Seilführung
Guide-câble, rail de guidage de lève-vitre avec un tel guide-câble et procédé d'assemblage d'un tel guide-câble

(43) Date of publication of application: 06.12.2006
(73) Proprietor: GRUPO ANTOLIN-INGENIERIA, S.A., 09007 Burgos (ES)
(72) Inventor: Martinez Moral, Francisco Javier, 09002 Burgos (ES); Gonzalez Rodriguez, Ignacio, 09006 Burgos (ES)
(74) Representative: Carpintero Lopez, Francisco

(56) References cited:
- EP-A- 1 306 508
- EP-A- 1 431 439
- WO-A-2004/003325
- DE-A1- 3 229 984
- DE-A1- 10 156 056
- US-A- 6 151 833

## Description

### OBJECT OF THE INVENTION

The present invention is of application for window regulators of vehicles.

An object of the invention is a cable guide of high strength and large diameter which minimizes the tension in the cable of the window regulator contributing to satisfactory conditions of functionality, assembly and reliability.

A further object of the invention is the window regulator rail which includes said cable guide and the assembly procedure of the cable guide in the window regulator rail.

### BACKGROUND OF THE INVENTION

The window regulators of vehicles incorporate in general terms means for driving the movement which can be manual or motorized and means of transmitting the movement which include cables which transmit the movement to a carriage which supports the window pane causing it to rise or descend.

The same cable generally transmits the raising and lowering movement of a carriage wherein the window pane of the vehicle is resting, for which reason it becomes necessary to interpose mechanical elements which carry out a change of direction of the cables from the drive to the carriage which will normally consist of fixed cable guides or sheaves.

Generally the sheaves employed in this type of mechanism are designed in plastic material with the object of reducing the weight of the mechanism and they are linked to the rail by means of a metallic pin which acts as an axis of rotation.

When calculating the radius of the sheaves a number of conditions must be taken into consideration, since on one hand an excessively large radius signifies the appearance of an appreciable bending moment caused by the thrust which the cable applies on the groove of the sheave, which can end up bending, or even breaking the sheave. On the other hand if the radius is very small the cable is subjected to a serious deformation which finishes by causing it to break through fatigue.

When assembling the cable on the last sheave of the mechanism of the window regulator the cable has to be forced whilst the sheave is turned, which operation requires an assembly tool which normally gets in the way when rotating the sheave at the same time.

The other element normally employed for redirecting the cable and providing tension in the cable consists of a fixed cable guide, which does not rotate with the movement of the cable, is constituted in plastic material and can have a partially circular sector corresponding to the contact zone with the cable. This means that there is serious wear in the contact zone between the cable and the guide, also proving common in these cases is the aforesaid problem with the sheaves with respect to the limitations in their radius.

The assembly of the cable on the last cable guide which is linked already to the rail, is carried out by levering the cable with respect to the guide, which implies that the guide must be sufficiently strong. In practice the last guide on which the cable is mounted is usually more robust than the rest of the guides of the rail, which signifies a complication in the assembly and in the standardization of products, since on a same rail two different types of guide will be mounted.

The cable guides are mounted on the rail using different methods, from a simple method of clipping to the most complicated of riveting a metallic element. In the case of the cable guide as last redirecting element, the resistance which it has to present means that assembly is by riveting or high-strength mechanical anchorage: screws, pressing, etc., which implies that the assembly is more complicated than by simple clipping with specific machinery and a longer assembly time.

Also this cable guide will have to incorporate a tensing device to provide the cable tension for the system, and be able to withstand the traction force for the tensing, for which reason it will be more expensive in its constitution and more expensive to produce.

An example of cable guide appears illustrated in the patent of invention JP 4 064 680 wherein a cable guide is reflected conceived in a type of special resin which confers thereupon rigidity and resistance to abrasion.

Another solution for guidance is reflected in the patent of invention US 4 090 329 which relates to a window regulator mechanism of a vehicle in which the cable is connected to the support of the window at one end and at the other end to a motor, the guidance element on which the cable slides having a flexible, tubular and arched sheath mounted on a rigid guide member.

On the other hand in the US patent 2002/0139051 a window regulator is disclosed in which a guide appears connected to the motor, linked by means of a cable to a lower guide and an upper guide, said cable being connected to a support of the window which is displaced in the vertical direction by the movement of the cable which slides on the upper and lower guides. The upper guide constitutes the final element of assembly and consists on an eccentric piece on which the cable is mounted, which piece rotates thereafter tensing the cable until fixing its position.

WO-A-2004/003325, DE-A-3229984 and EP-A-1306508 disclose different mechanisms involving pulleys arranged to rotate with the cables.

A cable guide according to preamble of claim 1 is known from US-A-6151833, disclosing, *inter alia,* a cable guide comprising a guide member resting on a support, whereby a cable can slide along a contact surface in a channel formed in the guide member.

### DESCRIPTION OF THE INVENTION

The invention relates to a cable guide as defined in claim 1, to a window regulator rail as defined in claim 1, and to a procedure as defined in claim 10. Some preferred embodiments of the invention are defined in the dependent claims.

The cable guide which this invention discloses resolves the aforesaid problems with a configuration different to that shown by the guides conventionally employed to reduce the tension in the cable, and also it incorporates a structural solution which allows the axial forces of the cable to be withstood for this diameter.

The cable guide is conceived formed by two independent pieces, an annular rim of plastic material which has a peripheral groove for the guidance of the cable and a web or central support, preferably metallic, strong, on which the rim is mounted and retained.

The cable guide incorporates means of retention between the rim and the central support which can consist, for example, of an upper projection of the central support which constitutes the butt against which the rim is fitted or also it can consist of a central groove or recess in which a continuous central protuberance of the rim is fitted.

The central support can be mounted on the rail of the window regulator by riveting or by other means of fastening or it can form a single piece with the body of the rail.

The rim is prevented from escaping with respect to the central support by the means of retention, however it can have a slight rotational slippage with respect to the central support when the cable starts to move or is stopped. During the movement of the window pane the cable is in contact with a circular sector of the rim, when the stopping of the mechanism takes place a small pull or tug of cable is produced which causes a small rotational slippage of the rim with respect to the central support, so that in the following movement of raising or lowering the window pane the cable will be in contact with a different segment of the rim to that of the previous movement. Thus the wear of the cable on the rim is distributed over the entire circumferential surface thereof.

The assembly of the cable guide constitutes another of the aspects of the invention and takes place according to the following sequence, in the first place the cable is placed around the rim, next the rim with the cable is pulled deforming it until positioning it on the central support which has been previously fixed or is part of the rail, and finally the rim with the cable is located around the central support.

The window regulator rail which incorporates the cable guide likewise constitutes another object of the invention, which can have the central support of the cable guide coupled to the same or which, as has been described previously, can be formed in a single piece of the same material as integrates the central support of the cable guide, this body for example being manufactured by injection. Additionally said body can incorporate a sector of appropriate geometry constituting a butt of the cable sheath.

The advantages obtained with the described configuration of the cable guide are summarized hereunder:
- It is a stronger cable guide than the conventional ones, incorporating a bigger structural part consisting of the central support formed in material such as metal or plastic reinforced with fibres of glass, metal, carbon or others, which can be integrated or not in the window regulator rail.
- The geometry of the plastic piece is simple, since it is a body of revolution, a rim easy to manufacture which requires only a small quantity of plastic material in comparison with solid cable guides.
- The assembly is simple, without intervention of additional pieces, by simple deformation of the rim and subsequent introduction on the central support.
- A smaller length of cable is necessary in comparison with that required for the sheaves.
- A standardization is achieved and therefore wide application of this type of cable guide, since the simple geometry of the cable guide,

symmetrical, can be used in different window regulator mechanisms.
- A strength is obtained in the cable guide which is greater than that obtained from a solid cable guide of the same diameter.
- These cable guides can be employed with the same geometry, both in a higher position and in a lower position with respect to the position of the window regulator assembly mounted in the vehicle, without needing to modifying the geometry of one with respect to the other to provide them with more strength.

### DESCRIPTION OF THE DRAWINGS

To complete the description which is being made and with the object of assisting in a better understanding of the characteristics of the invention, in accordance with a preferred practical embodiment thereof, said description is accompanied with a set of drawings as an integral part thereof, wherein by way of illustration and not restrictively, the following has been represented:
Figure 1. - It shows a view in perspective in which the cable guide is observed mounted on the window regulator rail.
Figures 2 to 4. - Show a side view in cross section of three possible embodiments of the cable guide with the cable mounted in which different means of retention are illustrated.
Figures 5 to 8. - Show the assembly sequence of the cable guide with the cable on the window regulator rail.

### PREFERRED EMBODIMENT OF THE INVENTION

With reference to the figures, a description is provided below of a preferred mode of embodiment of the cable guide and of the window regulator rail which includes the cable guide which constitute the object of this invention.

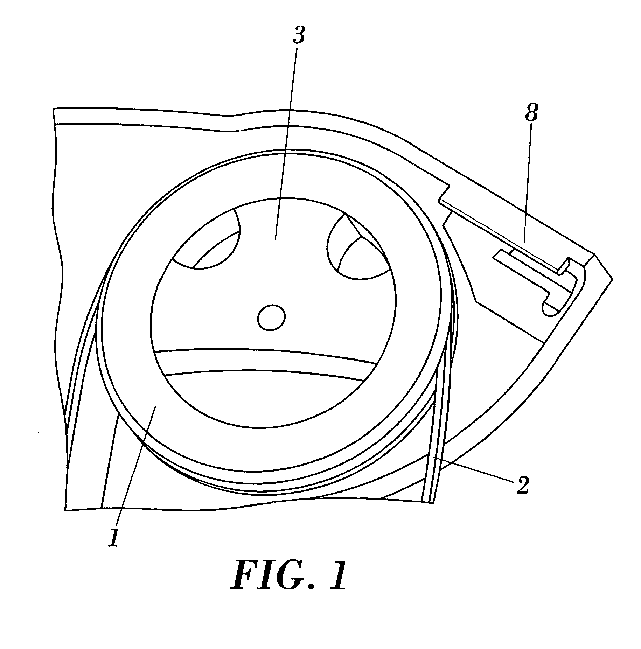

In figure 1 the cable guide is shown mounted on the window regulator rail in which it is seen that it is formed by a rim (1), preferably of plastic material, provided with a groove around which the cable (2) of the window regulator slides and a central support (3), preferably metallic, on which the rim (1) is fitted with means of retention (4, 5, 6) between the rim (1) and the central support (3) which prevents the egress of the rim (1) in a direction not perpendicular to the axis.

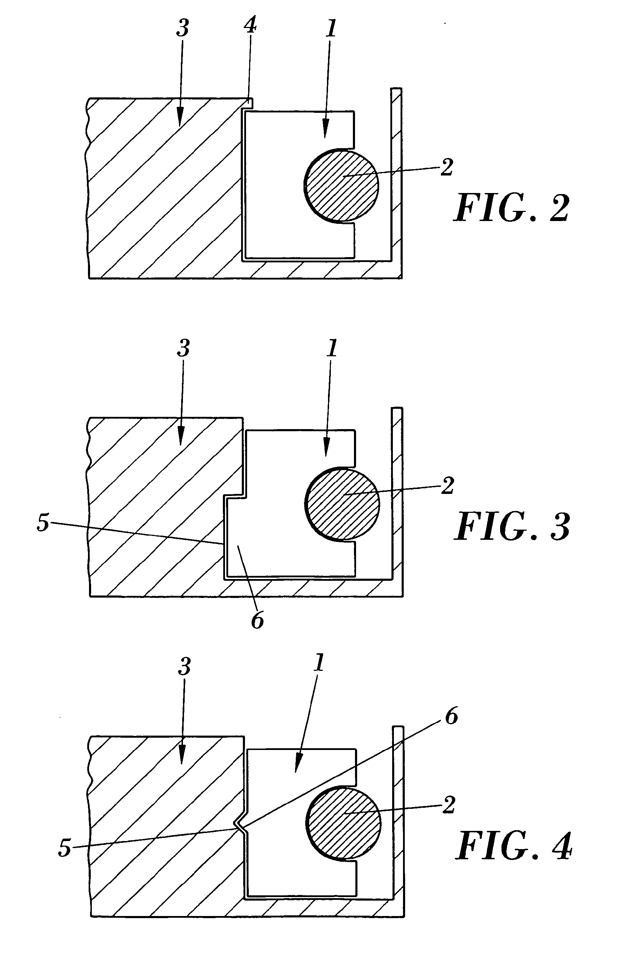

In a possible embodiment the means of retention (4, 5, 6) can consist of an upper projection (4) defined in the central support (3), as represented in figure 2, against which the rim (1) abuts preventing its egress, or the means of retention (4, 5, 6) can consist of a groove or recess (5) made in the central support (3) in correspondence with a protuberance (6) defined in the rim (1), as is observed in figures 3 and 4.

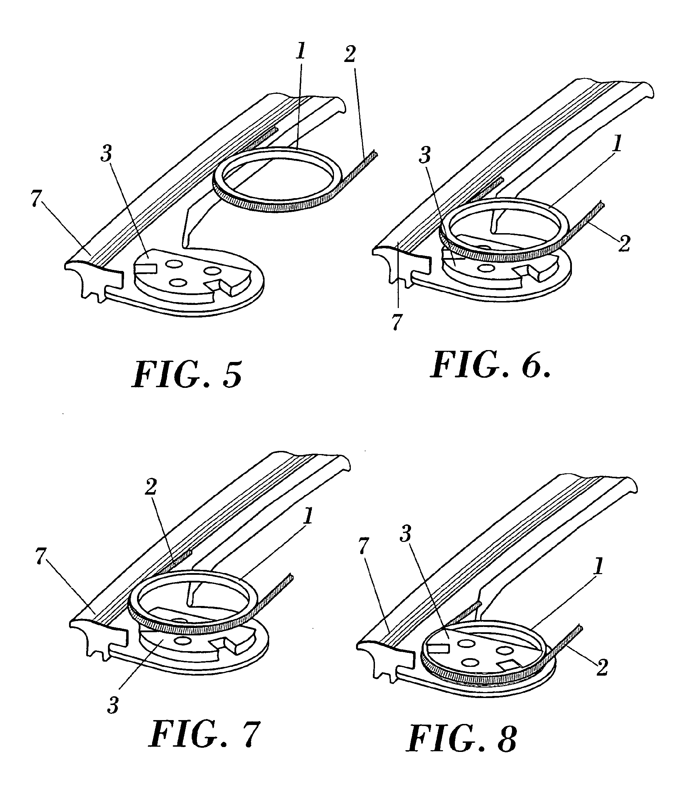

The window regulator rail, represented in figure 8, comprises a body (7) and at least one cable guide with the characteristics described above, in which in an optional way the possibility is envisaged in which the central support (3) is integrated forming a single piece with the body (7) of the window regulator rail.

In the actual body (7) of the window regulator rail a cable sheath butt (8) can also be found, as appears represented in figure 1.

In figures 5 to 8 the assembly procedure of the cable guide is seen with the cable in the window regulator rail. In figure 5 the cable (2) appears mounted around the rim (1) prior to its placement around the central support (3), subsequently in figure 6 the rim of plastic material (1) is shown with the cable (2) pulled, the rim of plastic material (1) is deformed elastically with the cable (2) and confronts the central support (3) in figure 7, finally in figure 8 the rim (1) with the cable (2) is observed now mounted on the central support (3) relieving the deformation of the rim (1).

## Claims

1. Cable guide for a window regulator rail, comprising:
- a rim (1) provided with a groove in which a cable (2) of the window regulator is arranged to slide during operation of the window regulator;
- a central support (3) on which the rim (1) is fitted so that the cable, during operation of the window regulator, will slide upon the rim, without any substantial rotation of the rim following the movement of the cable, said central support being non-rotatably attached to the rail, **characterised by**
- means of retention (4, 5, 6) between the rim (1) and the central support (3) which prevent egress of the rim (1) in a direction not perpendicular to the axis;
wherein the rim (1) is rotatably mounted on the central support (3) so that the rim does not substantially rotate around the central support following the movement of the cable upon the rim during operation of the window regulator, but so that the rim can slip rotationally around the central support (3) when the cable starts to move or is stopped.

2. Cable guide according to claim 1, wherein the means of retention (4, 5, 6) consist of an upper projection (4) defined in the central support (3).

3. Cable guide according to claim 1, wherein the means of retention (4, 5, 6) consist of a recess (5) made in the central support (3) in correspondence with a protuberance (6) defined in the rim (1).

4. Cable guide according to any of the preceding claims, in which the rim (1) is made of an elastically deformable material.

5. Cable guide for a window regulator rail according to claim 4, **characterized in that** the rim (1) is made of plastic material.

6. Cable guide according to any of the preceding claims, wherein the central support (3) is made of metallic material.

7. Window regulator rail, comprising, a body (7) and at least one cable guide according to any of the preceding claims.

8. Window regulator rail according to claim 7, wherein the central support (3) is integrated forming a single piece with the body (7) of the window regulator rail

9. Window regulator rail according to claim 8, wherein the piece is made of plastic.

10. Window regulator rail according to any of claims 7-9, wherein, in the body (7) of the window regulator rail a cable sheath butt (8) is defined.

11. Procedure of assembly of a cable guide in accordance with any of claims 1-6 in a window regulator rail, the central support (3) of the cable guide being coupled initially or integrated in a body (7) constituting the window regulator rail, wherein the procedure comprises the following stages:
- placement of the cable (2) around the rim (1),
- elastic deformation of the rim (1),
- confrontation of the rim (1) with the central support (3) causing the traction of the cable (2),
- lodging of the central support (3) inside the rim (1) determining the relieving of the deformation of the rim (1).

## Patentansprüche

1. Seilführung für eine Fensterheberschiene, enthaltend:
- einen Kranz (1), der mit einer Nut versehen ist, in welcher ein Seil (2) des Fensterhebers so angeordnet ist, dass es während des Betriebs des Fensterhebers gleitet;
- eine Mittelhalterung (3), auf welche der Kranz (1) aufgesetzt ist, so dass das Seil während des Betriebs des Fensterhebers auf dem Kranz ohne wesentliche, der Seilbewegung folgende Drehung des Kranzes gleitet, wobei die Mittelhalterung an der Schiene nicht drehbar befestigt ist,
**gekennzeichnet durch**
- eine Rückhalteeinrichtung (4, 5, 6) zwischen dem Kranz (1) und der Mittelhalterung (3), welche das Abgehen des Kranzes (1) in einer zu der Achse nicht senkrechten Richtung verhindert;
wobei der Kranz (1) auf der Mittelhalterung (3) so drehbar montiert ist, dass der Kranz der Bewegung des Seils auf dem Kranz während des Betriebs des Fensterhebers folgend sich im wesentlichen nicht um die Mittelhalterung dreht, sondern so, dass der Kranz um die Mittelhalterung (3) drehend gleiten kann, wenn das Seil sich zu bewegen beginnt oder gestoppt wird.

2. Seilführung nach Anspruch 1, bei welcher die Rückhalteeinrichtung (4, 5, 6) aus einem oberen Vorsprung (4) besteht, der in der Mittelhalterung (3) gebildet ist.

3. Seilführung nach Anspruch 1, bei welcher die Rückhalteeinrichtung (4, 5, 6) aus einer Vertiefung (5) besteht, die in der Mittelhalterung (3) in Übereinstimmung mit einem in dem Kranz (1) gebildeten Vorsprung (6) hergestellt ist.

4. Seilführung nach einem der vorstehenden Ansprüche, bei welcher der Kranz (1) aus einem elastisch verformbaren Material hergestellt ist.

5. Seilführung für eine Fensterheberschiene nach Anspruch 4, **dadurch gekennzeichnet, dass** der Kranz (1) aus Kunststoffmaterial hergestellt ist.

6. Seilführung nach einem der vorstehenden Ansprüche, bei welcher die Mittelhalterung (3) aus Metallmaterial hergestellt ist.

7. Fensterheberschiene, enthaltend einen Körper (7) und mindestens eine Seilführung nach einem der vorstehenden Ansprüche.

8. Fensterheberschiene nach Anspruch 7, bei welcher die Mittelhalterung (3) mit dem Körper (7) der Fensterheberschiene in einem Stück integriert ist.

9. Fensterheberschiene nach Anspruch 8, bei welcher das Stück aus Kunststoff hergestellt ist.

10. Fensterheberschiene nach einem der Ansprüche 7-9, bei welcher in dem Körper (7) der Fensterheberschiene ein Seilmantelendstück (8) gebildet ist.

11. Verfahren zur Montage einer Seilführung gemäß einem der Ansprüche 1-6 in einer Fensterheberschiene, wobei die Mittelhalterung (3) der Seilführung anfänglich mit einem die Fensterheberschiene bildenden Körper (7) verbunden oder in diesen integriert ist, wobei das Verfahren die folgenden Schritte enthält:
- Anordnen des Seils (2) um den Kranz (1),
- elastisches Verformen des Kranzes (1),
- Gegenüberstellen des Kranzes (1) und der Mittelhalterung (3), was eine Zugspannung des Seils (2) verursacht,
- Einsetzen der Mittelhalterung (3) innerhalb des Kranzes (1) unter Entlastung der Verformung des Kranzes (1).

## Revendications

1. Guide-câble de rail de lève-vitre comportant :
- une collerette (1) munie d'une gorge recevant le câble (2) d'un lève-vitre pour y glisser pendant le fonctionnement du lève-vitre,
- un support central (3) recevant la collerette (1) de façon que pendant le fonctionnement du lève-vitre, il glisse sur la collerette sans rotation particulière de la collerette suivant le mouvement du câble, ce support central étant fixé au rail de manière bloquée en rotation, **caractérisé par**
- un moyen de retenue (4, 5, 6) entre la collerette (1) et le support central (3) évitant que la collerette (1) ne s'échappe dans une direction perpendiculaire à l'axe,
- la collerette (1) montée à rotation sur support central (3) pour qu'elle ne tourne pratiquement pas autour du support central (3) sous l'effet du mouvement du câble sur la collerette pendant le fonctionnement du lève-vitre, mais pour que la collerette puisse glisser en rotation autour du support central (3) lors du démarrage ou de l'arrêt du câble.

2. Guide-câble selon la revendication 1,
**caractérisé en ce que**
le moyen de retenue (4, 5, 6) est formé d'une partie supérieure en saillie (4) du support central (3).

3. Guide-câble selon la revendication 1,
**caractérisé en ce que**
le moyen de retenue (4, 5, 6) est formé d'une cavité (5) dans le support central (3) correspondant à une partie en saillie (6) de la collerette (1).

4. Guide-câble selon l'une des revendications précédentes,
**caractérisé en ce que**
la collerette (1) est réalisée en une matière déformable élastiquement.

5. Guide-câble selon la revendication 4,
**caractérisé en ce que**
la collerette (1) est en matière plastique.

6. Guide-câble selon l'une des revendications précédentes,
**caractérisé en ce que**
le support central (3) est en métal.

7. Rail de lève-vitre comportant un corps (7) et au moins un guide-câble selon l'une des revendications précédentes.

8. Rail de lève-vitre c selon la revendication 7,
**caractérisé en ce que**
le support central (3) est en une seule pièce avec le corps (7) du rail de lève-vitre.

9. Rail de lève-vitre c selon la revendication 8,
**caractérisé en ce que**
la pièce est en matière plastique.

10. Rail de lève-vitre selon l'une des revendications 7 à 9,
**caractérisé en ce que**
le corps (7) du rail de lève-vitre comporte une butée (8) pour la gaine du câble.

11. Procédé d'assemblage d'un guide-câble selon l'une des revendications 1 à 6 d'un rail de lève-vitre dont le support central (3) du guide-câble est couplé initialement ou est intégré dans un corps (7) formant le rail du lève-vitre,
procédé comprenant les étapes suivantes :
- mise en place du câble (2) autour de la collerette (1),
- déformation élastique de la collerette (1),
- conformation de la collerette (1) avec le support central (3) réalisant la traction sur le câble (2),
- mise en place du support central (3) à l'intérieur de la collerette (1) déterminant la libération de la déformation de la collerette (1).
